# FASCICULE DE BREVET EUROPEEN

(11) **EP 1 802 908 B1**
(45) Date de publication et mention de la délivrance du brevet: **02.05.2012**
(21) Numéro de dépôt: 05811859.7
(22) Date de dépôt: 19.10.2005
(51) Int. Cl.: F17C 13/04

(54) **DISPOSITIF DE CONNEXION D'APPAREIL A GAZ ET CARTOUCHE DE GAZ**
VORRICHTUNG FÜR DEN ANSCHLUSS EINES GASBETRIEBENEN GERÄTS AN EINE GASKARTUSCHE
DEVICE FOR CONNECTING A GAS-OPERATED APPLIANCE AND A GAS CARTRIDGE

(30) Priorité: 19.10.2004 FR 0411089
(43) Date de publication de la demande: 04.07.2007
(73) Titulaire: APPLICATION DES GAZ, 69230 Saint Genis Laval (FR)
(72) Inventeur: CARRATO, Eric, F-69440 Chaussan (FR); CHAMPION, Marc, F-69006 LYON (FR); ARNAUD, Sylvain, F-69600 Oullins (FR)
(74) Mandataire: Maureau, Philippe
(86) Numéro de dépôt international: PCT/FR2005/002598
(87) Numéro de publication internationale: WO 2006/042971

(56) Documents cités:
- WO-A-01/35015
- WO-A-98/06626
- US-B1- 6 202 982

## Description

La présente invention concerne un dispositif de connexion d'appareil à gaz et une cartouche de gaz comportant une valve.

Dans le domaine des appareils portatifs de cuisson, d'éclairage, de bricolage, fonctionnant avec une cartouche de gaz combustible sous pression, le système de connexion de l'appareil à la cartouche revêt une importance cruciale en raison du danger pouvant résulter d'une fuite de gaz ou d'une déconnexion de l'appareil et de sa cartouche.

On utilise depuis de nombreuses années une cartouche de gaz, c'est-à-dire un conteneur métallique renfermant un gaz combustible sous pression sur laquelle une valve est sertie. Cette valve permet d'accéder au gaz contenu dans la cartouche.

Le dispositif de connexion de l'appareil assure deux fonctions. D'une part, il assure la retenue physique de l'appareil sur la cartouche, et d'autre part, simultanément, il assure l'ouverture de la valve et ce, bien entendu, de manière étanche.

Le document US 6 202 982 décrit un dispositif de connexion selon le préambule de la revendication 1. Le document NO 01/35015 décrit une cartouche de gaz combustible liquide.

On connaît par les documents EP-A-278 873 et EP-A-981 005 deux systèmes d'accouplement qui utilisent des pattes d'accrochage flexibles qui viennent s'engager dans une rainure annulaire de la valve issue du sertissage de celle-ci sur la cartouche. Les pattes flexibles sont bloquées dans la rainure de la valve et assurent une inséparabilité de l'appareil et de la cartouche.

Ces systèmes d'accouplement sont globalement satisfaisants, mais leur mise en oeuvre réclame toutefois une certaine attention de la part de l'utilisateur.

L'invention a donc pour but de proposer un dispositif de connexion d'un appareil à gaz et une cartouche de gaz fonctionnant avec ce système dont la mise en oeuvre soit simple et aisée.

Un autre but de l'invention est de conserver la compatibilité de la cartouche avec les systèmes de connexion existants, notamment les systèmes de connexion montrés par les documents EP-A-278 873 et EP-A-981 005.

L'invention a essentiellement pour objet un dispositif de connexion pour un appareil à gaz sur une valve d'une cartouche de gaz comprenant :
- un corps de robinet solidaire de l'appareil à gaz,
- une bague d'accouplement axiale solidaire en rotation du corps du robinet présentant au moins une patte élastique radialement susceptible de s'engager dans une rainure d'une valve de la cartouche,
- une bague de verrouillage pouvant occuper une position de verrouillage dans laquelle la bague de verrouillage maintient chaque patte engagée dans la rainure et une position de déverrouillage dans laquelle la bague de verrouillage autorise le dégagement de chaque patte élastique de la rainure et,
- un cylindre muni d'un conduit susceptible d'effacer un clapet de la valve,
caractérisé en ce que la bague de verrouillage est rotative et présente des moyens d'accouplement radiaux susceptibles de coopérer avec des moyens d'accouplement radiaux complémentaires prévus sur la valve de la cartouche de gaz, de telle sorte que la bague rotative de verrouillage peut être tournée entre la position de verrouillage et la position de déverrouillage par une rotation de la cartouche par rapport au disposition de connexion.

Le fondement de l'invention est de prévoir un entraînement en rotation de la bague rotative du dispositif par la cartouche elle-même.

En effet, la cartouche est le composant le plus volumineux de l'ensemble cartouche appareil, dont la prise en main est donc la plus aisée. En outre, la rotation de la cartouche permet d'appliquer un couple important

Selon une forme de réalisation, la bague rotative présente au moins un cran radial.

Dans une forme de réalisation particulièrement avantageuse, la bague rotative présente une pluralité de crans radiaux sur sa périphérie.

Pour une bonne tenue du dispositif sur la cartouche, la bague d'accouplement axial présente plusieurs pattes élastiques ayant, chacune à leur extrémité, une nervure d'accouplement.

Selon une possibilité de réalisation, la bague d'accouplement axial présente trois pattes élastiques disposées à 120° ayant, chacune à leur extrémité, une nervure d'accouplement

Le blocage des pattes élastiques peut être réalisé grâce au fait que la bague rotative de verrouillage présente plusieurs talons pouvant, chacun, venir en appui contre une patte de la bague d'accouplement

Selon une possibilité de réalisation, la bague rotative de verrouillage présente trois talons disposés à 120° pouvant, chacun, venir en appui contre une patte de la bague d'accouplement.

Selon une disposition avantageuse, une butée est adjacente à au moins l'un des talons.

De préférence, une butée est adjacente à chaque talon.

Selon une caractéristique préférée, la bague rotative présente au moins une nervure axiale susceptible de s'encliqueter dans au moins une rainure axiale ménagée dans la face tournée vers l'intérieur d'une patte élastique.

Pour remplacer le dispositif dans sa position de déverrouillage, des moyens de rappel élastique sont interposés entre la bague d'accouplement et la bague rotative dont l'action de rappel tend à faire revenir la bague rotative en position de déverrouillage.

Selon une possibilité, un ressort est interposé entre la bague d'accouplement et la bague rotative dont l'action tend à faire revenir la bague rotative en position de déverrouillage.

Pour indiquer à un utilisateur l'état du dispositif, il présente des moyens de signalisation visuels de la position de la bague rotative.

Dans une forme de réalisation du dispositif, la bague d'accouplement présente une jupe dans laquelle est pratiquée une fenêtre permettant de faire apparaître un symbole de verrouillage embarqué sur la bague rotative lorsque le dispositif est en position de verrouillage et permettant de faire apparaître un symbole de déverrouillage embarqué sur la bague rotative lorsque le dispositif est en position de déverrouillage.

L'invention concerne également une cartouche de gaz combustible liquide comprenant un conteneur ayant une ouverture obturée par une valve, ladite valve ayant une paroi radiale circulaire de fond qui supporte un clapet central et une paroi axiale cylindrique latérale qui présente, à sa liaison avec le conteneur, une rainure annulaire surmontée d'un bourrelet annulaire, caractérisée en ce que la paroi axiale présente au moins un moyen d'accouplement radial susceptible de coopérer avec des moyens d'accouplement radiaux complémentaires prévus dans une bague rotative d'un dispositif de connexion selon l'invention, de telle sorte que la bague rotative de verrouillage peut-être tournée entre la position de verrouillage et la position de déverrouillage par une rotation de la cartouche par rapport au dispositif de connexion

Selon une possibilité, la paroi axiale de la valve présente au moins une dent radiale.

De préférence, la paroi axiale de la valve présente une pluralité de dents radiales.

En outre, les moyens d'accouplement sont adjacents à la paroi radiale circulaire de fond.

Pour sa bonne compréhension, l'invention est décrite en référence au dessin ci annexé représentant, à titre d'exemple non limitatif, une forme de réalisation d'un dispositif de connexion d'un appareil à gaz et une cartouche de gaz selon l'invention.
Figure 1 est une vue en perspective du dispositif de connexion et de la cartouche, la cartouche étant représentée avec arrachement partiel,
Figure 2 est une vue en perspective éclatée du dispositif de connexion,
Figure 3 représente le dispositif de connexion en regard de la cartouche,
Figure 4 est une vue en coupe selon IV-IV de figure 3,
Figure 5 est une vue de détails du dispositif de connexion.

Préliminairement, on rappelle que le dispositif de connexion d'un appareil à gaz concerne tout type d'appareil à gaz portable de type réchaud, brûleur, lampe, barbecue ou appareil de bricolage. Sur le dessin, l'appareil à gaz n'est pas représenté, mais cela pourrait être l'un quelconque des appareils mentionnés.

On commencera par la description du dispositif de connexion selon l'invention.

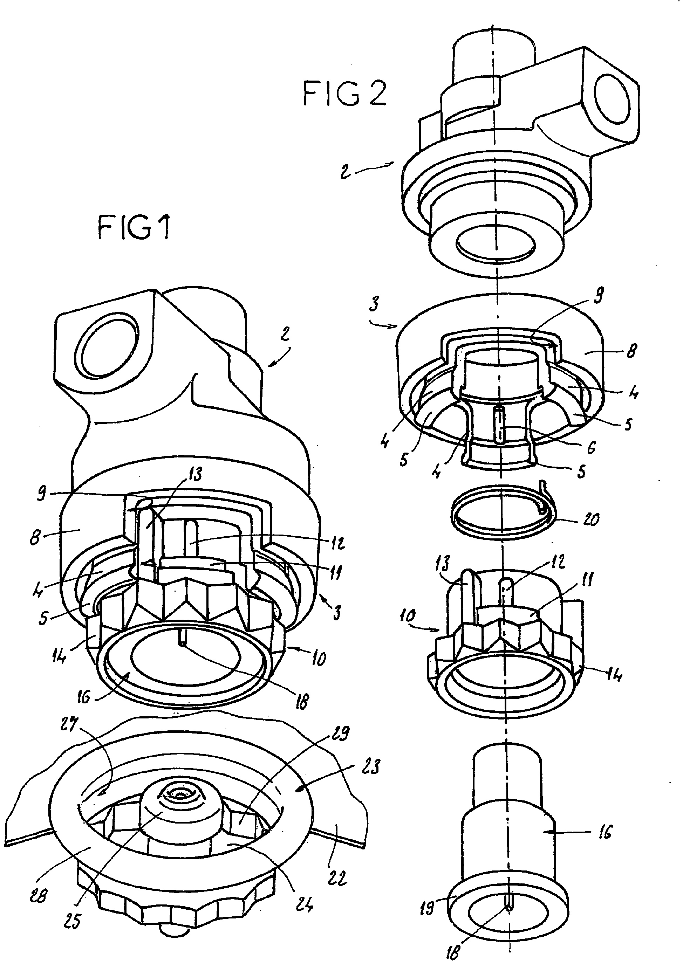

Pour cela, on se reportera tout d'abord à la figure 2.

Comme on peut le voir sur cette figure, le dispositif de connexion comprend tout d'abord un corps de robinet 2, c'est-à-dire une pièce métallique permettant d'ouvrir ou de fermer le passage du gaz. Ce corps de robinet 2 est de structure classique.

Sur ce corps de robinet 2, est engagé une bague d'accouplement 3. Cette bague d'accouplement 3 pouvant être réalisée dans une matière plastique ou dans d'autres matériaux présente trois pattes 4 disposées à 120°. Chacune des pattes 4 présente à son extrémité libre une nervure 5 qui fait saillie. Sur leur face intérieure, chacune de ces pattes est creusée d'une rainure 6 longitudinale.

On note également que la bague d'accouplement 3 présente une jupe 8 dans laquelle est ménagée une fenêtre 9. Un point, qu'il est important de noter concernant la bague d'accouplement est qu'elle est solidaire du corps du robinet. En d'autres termes, aucune rotation de la bague d'accouplement n'est prévue par rapport au corps du robinet.

Une bague rotative 10 est engagée sur la bague d'accouplement 3. Cette bague rotative 10 pouvant être réalisée en matière plastique présente une forme sensiblement cylindrique.

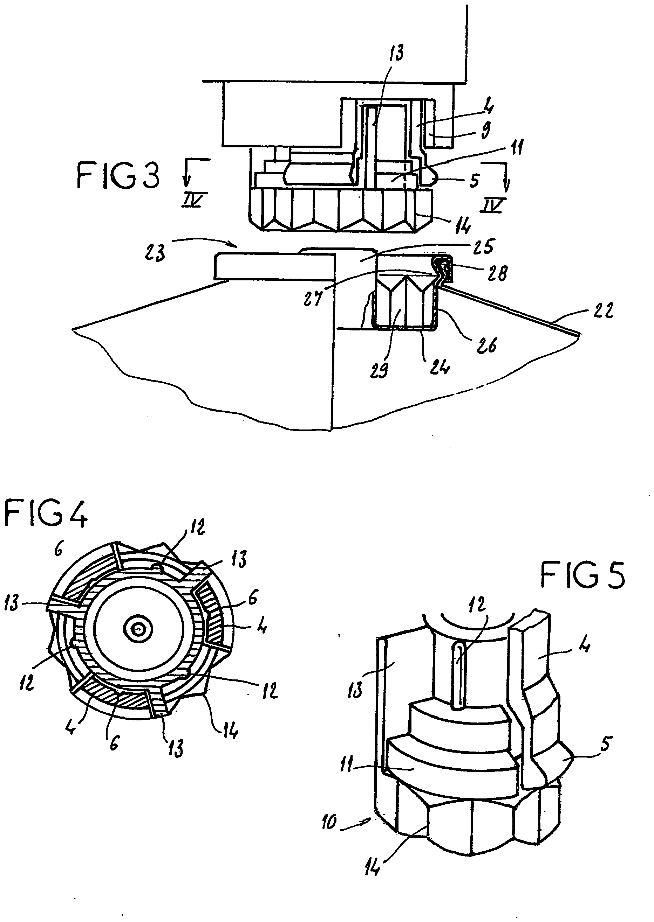

Comme le montre plus clairement la figure 5, la bague rotative reçoit sur sa face extérieure un talon 11 qui, dans l'exemple représenté, a une structure en gradin, le talon 11 étant surmonté d'une nervure 12 longitudinale.

On note également que chaque talon 11 est bordé d'une butée radiale 13.

La dernière caractéristique structurelle tout à fait fondamentale de la bague rotative est que celle-ci présente une pluralité de crans 14 radiaux.

Dans l'exemple représenté, ces crans 14 radiaux sont réalisés sur une couronne située à la base de la bague rotative.

Comme le montrent les figures 3 et 5, la bague rotative 10 peut tourner entre une position dans laquelle les pattes élastiques 4 disposent d'un espace de dégagement radial, cette configuration étant plus particulièrement visible sur la figure 5, et une position dans laquelle, après rotation de la bague rotative, les pattes élastiques 4 sont chacune adossées à un talon 11 de la bague rotative 10. La rotation de la bague rotative 10 est bornée angulairement par chacune des butées 13.

Le dernier élément constituant le dispositif de connexion est un cylindre 16 de métal ou éventuellement d'autres matériaux qui supporte un conduit 18 pousse clapet dont la fonction apparaîtra plus loin. Ce cylindre métallique 16 est emmanché dans le corps du robinet 2 et grâce à un épaulement 19 retient la bague rotative.

Il est également à noter qu'un ressort 20 est interposé entre la bague d'accouplement 3 et la bague rotative 10, l'action de ce ressort 20 vise à placer la bague rotative dans une position dans laquelle la flexion des pattes 4 est possible.

La cartouche, selon l'invention, qui est représentée aux figures 1 et 3 présente de manière classique un conteneur 22 dont l'ouverture est obturée par une valve 23.

Cette valve 23 métallique possède une paroi radiale circulaire 24 de fond qui supporte un clapet central 25 et une paroi axiale cylindrique 26 latérale. La liaison de la valve sur le conteneur 22 est réalisée par une rainure annulaire 27 surmontée d'un bourrelet annulaire 28. Le clapet 25, qui n'est pas représenté sur le dessin, est d'une structure classique, c'est-à-dire qu'il comprend un obturateur poussé par un ressort.

La caractéristique tout à fait nouvelle de la cartouche selon l'invention est que la valve 23 présente, dans sa paroi axiale, une pluralité de dents 29.

La mise en oeuvre du dispositif et de sa cartouche est la suivante.

Le dispositif de connexion surmonté d'un appareil est approché de la cartouche, comme le représente la figure 3.

Chacun des crans 14 de la bague rotative 10 pénètre dans les dents 29 ménagées dans la paroi axiale de la valve, tandis que les nervures 5, dont est pourvue chacune des pattes élastiques 4, viennent s'engager dans la rainure annulaire 27 de la valve 23.

On doit préciser que cet engagement des nervures dans la rainure 5 annulaire 27 est possible puisque l'action du ressort 20 dont le dispositif est pourvu tend à mettre la bague rotative 10 dans une position dans laquelle les pattes élastiques 4 ont un dégagement radial.

On doit néanmoins noter qu'il est envisagé de mettre en oeuvre l'invention sans ressort 20 auquel cas l'utilisateur gère lui-même les positions de verrouillage et de déverrouillage de la bague rotative 10.

Au cours de l'engagement du dispositif dans la cartouche, le conduit 18 vient en appui contre le clapet 25 et autorise le passage du gaz vers le corps du robinet 2 et, in fine, vers un appareil à gaz quelconque.

L'utilisateur n'a plus alors qu'à prendre la cartouche et à la faire pivoter par rapport au dispositif de connexion. Ce mouvement est extrêmement simple et est facilité par le fait que la cartouche est d'un grand diamètre et donc que l'utilisateur peut appliquer un couple important.

En fin de rotation, chaque patte élastique 4 vient en appui contre une butée 13 de la bague rotative 10 et, par conséquent, chaque patte élastique 4 est adossée à un talon 11, tandis que la rainure 6 ménagée dans la face intérieure de chaque patte élastique 4 vient s'encliqueter dans la nervure 12 longitudinale dont la bague rotative 10 est munie. Cet encliquetage peut s'accompagner d'un signal sonore et tactile correspondant au passage d'un "point dur" qui indique à l'utilisateur que le verrouillage du dispositif est effectif.

L'utilisateur peut être également averti du fait que le verrouillage est effectif par le fait que la fenêtre 9 ménagée dans la jupe de la bague d'accouplement se trouve en face d'un pictogramme imprimé sur la bague rotative indiquant que le verrouillage est effectif et que l'appareil peut être utilisé.

L'invention fournit ainsi un dispositif de connexion et une cartouche de gaz combustible liquide dont la mise en oeuvre est extrêmement intuitive puisqu'elle utilise comme instrument de verrouillage la cartouche elle-même qui est l'objet qui présente la plus grande taille et qu'un utilisateur utilisera naturellement et intuitivement.

On note également que le dispositif présente un nombre réduit de pièces, ce qui sur un plan mécanique et économique est tout à fait favorable à cette solution.

Un autre avantage qu'il est utile de mentionner est que la cartouche selon l'invention est compatible avec des dispositifs à pattes élastiques de verrouillage existants actuellement.

Bien entendu, lorsque la cartouche est mise en oeuvre avec des dispositifs de connexion préexistants, la mise en rotation de celle-ci n'entraîne pas bien entendu le verrouillage du dispositif.

Bien entendu, l'invention n'est pas limitée à la forme de réalisation décrite ci-dessus, mais au contraire elle en embrasse toutes les formes de réalisation. De nombreuses variantes peuvent être envisagées concernant les moyens de connexion radiaux de la cartouche et de la bague rotative.

On peut notamment envisager simplement un méplat réalisé dans la bague rotative correspondant avec un méplat réalisé dans la paroi longitudinale de la valve.

On peut également prévoir d'autres moyens de signalisation de verrouillage du dispositif. On peut notamment prévoir de prolonger l'une ou les trois butées 13 d'un doigt qui pourrait venir en regard d'une ouverture pratiquée dans la jupe de la bague d'accouplement lorsque le dispositif est en position de verrouillage. Un système lumineux à LED peut également être envisagé pour indiquer le verrouillage effectif du dispositif.

## Revendications

1. Dispositif de connexion pour un appareil à gaz, pouvant être connecté sur une valve (23) d'une cartouche de gaz comprenant :
- un corps de robinet (2) solidaire de l'appareil à gaz,
- une bague d'accouplement (3) axiale solidaire en rotation du corps de robinet (2) présentant au moins une patte élastique (4) radialement destinée à être engagée dans une rainure (27) annulaire d'une valve de la cartouche,
- une bague rotative (10) de verrouillage, rotative par rapport à la bague d'accouplement (3), et pouvant occuper une position de verrouillage dans laquelle la bague rotative (10) est destinée à maintenir chaque patte élastique (4) engagée dans la rainure (27) et une position de déverrouillage dans laquelle la bague rotative (10) est destinée à autoriser le dégagement de chaque patte élastique (4) de la rainure (27) et,
- un cylindre (16) muni d'un conduit (18) destiné à effacer un clapet de la valve,
**caractérisé en ce que** la bague de verrouillage (10) est rotative et présente des moyens d'accouplement radiaux susceptibles de coopérer avec des moyens d'accouplement radiaux complémentaires prévus sur la valve (23) de la cartouche de gaz, de telle sorte que la bague rotative (10) de verrouillage peut être tournée entre la position de verrouillage et la position de déverrouillage par une rotation de la cartouche par rapport au dispositif de connexion.

2. Dispositif selon la revendication 1, **caractérisé en ce que** la bague rotative (10) présente au moins un cran radial.

3. Dispositif selon la revendication 2, **caractérisé en ce que** la bague rotative (10) présente une pluralité de crans (14) radiaux sur sa périphérie.

4. Dispositif selon l'une des revendications 1 à 3, **caractérisé en ce que** la bague d'accouplement (3) axial présente plusieurs pattes élastiques (4) ayant, chacune à leur extrémité, une nervure (5) d'accouplement.

5. Dispositif selon la revendication 4, **caractérisé en ce que** la bague d'accouplement (3) axial présente trois pattes élastiques (4) disposées à 120° ayant, chacune à leur extrémité, une nervure (5) d'accouplement.

6. Dispositif selon l'une des revendications 1 à 5, **caractérisé en ce que** la bague rotative (10) de verrouillage présente plusieurs talons (11) pouvant, chacun, venir en appui contre une patte de la bague d'accouplement (3).

7. Dispositif selon la revendication 6, **caractérisé en ce que** la bague rotative (10) de verrouillage présente trois talons (11) disposés à 120° pouvant, chacun, venir en appui contre une patte de la bague d'accouplement (3).

8. Dispositif selon l'une des revendications 6 à 7, **caractérisé en ce qu'**une butée (13) est adjacente à au moins l'un des talons (11).

9. Dispositif selon la revendication 8, **caractérisé en ce qu'**une butée (13) est adjacente à chaque talon (11).

10. Dispositif selon l'une des revendications 1 à 9, **caractérisé en ce que** la bague rotative (10) présente au moins une nervure axiale (12) susceptible de s'encliqueter dans au moins une rainure (6) axiale ménagée dans la face tournée vers l'intérieur d'une patte élastique (4).

11. Dispositif selon l'une des revendications 1 à 10, **caractérisé en ce que** des moyens de rappel élastique (20) sont interposés entre la bague d'accouplement (3) et la bague rotative (10) dont l'action de rappel tend à faire revenir la bague rotative (10) en position de déverrouillage.

12. Dispositif selon la revendication 11, **caractérisé en ce qu'**un ressort (20) est interposé entre la bague d'accouplement (3) et la bague rotative (10) dont l'action tend à faire revenir la bague rotative (10) en position de déverrouillage.

13. Dispositif selon l'une des revendications 1 à 12, **caractérisé en ce qu'**il présente des moyens de signalisation visuels de la position de la bague rotative (10).

14. Dispositif selon la revendication 13, **caractérisé en ce que** la bague d'accouplement (3) présente une jupe (8) dans laquelle est pratiquée une fenêtre (9) permettant de faire apparaître un symbole de verrouillage embarqué sur la bague rotative (10) lorsque le dispositif est en position de verrouillage et permettant de faire apparaître un symbole de déverrouillage embarqué sur la bague rotative (10) lorsque le dispositif est en position de déverrouillage.

15. Cartouche de gaz combustible liquide comprenant un conteneur (22) ayant une ouverture obturée par une valve (23), ladite valve (23) ayant une paroi radiale (24) circulaire de fond qui supporte un clapet (25) central et une paroi axiale (26) cylindrique latérale qui présente, au niveau de sa liaison avec le conteneur (22), une rainure annulaire (27) surmontée d'un bourrelet annulaire (28), **caractérisée en ce que** la paroi axiale (26) présente au moins un moyen d'accouplement radial destinée à coopérer avec des moyens d'accouplement radiaux complémentaires selon l'une des revendications 2 ou 3 prévus dans une bague rotative (10) d'un dispositif de connexion selon l'une des revendications 1 à 14, de telle sorte que la bague rotative (10) de verrouillage peut être tournée entre la position de verrouillage et la position de déverrouillage par une rotation de la cartouche par rapport au dispositif de connexion.

16. Cartouche de gaz combustible liquide selon la revendication 15, **caractérisée en ce que** la paroi axiale (26) de la valve présente au moins une dent radiale.

17. Cartouche de gaz combustible liquide selon la revendication 16, **caractérisée en ce que** la paroi axiale (26) de la valve (23) présente une pluralité de dents (29) radiales.

18. Cartouche de gaz combustible liquide selon l'une des revendications 15 à 17, **caractérisée en ce que** les moyens d'accouplement sont adjacents à la paroi radiale circulaire de fond (24).

## Claims

1. A device for connecting gas equipment on a valve (23) of a gas cartridge, comprising:
- a body of a tap (2) fixed to the gas equipment,
- an axial coupling ring (3) secured in rotation to the body of the tap (2) having at least one elastic lug (4) which is intended to engage radially in an annular groove (27) of a valve of the cartridge,
- a rotary locking ring (10), rotary in relation to the axial coupling ring (3), and which is intended to occupy a locking position in which the rotary ring (10) is intended to keep each elastic lug (4) engaged in the groove (27) and a release position in which the rotary ring (10) is intended to allow each elastic lug (4) to be disengaged from the groove (27), and
- a cylinder (16) having a tube (18) which is intended to override a shut-off device of the valve,
**characterized in that** the rotary locking ring (10) has radially coupling means which are intended to cooperate with complementary radial coupling means provided on the gas cartridge valve (23), so that the rotary locking ring (10) can be turned between the locking position and the release position by rotating the cartridge in relation to the connecting device.

2. The device according to claim 1, **characterized in that** the rotary ring (10) has at least one radial notch.

3. The device according to claim 2, **characterized in that** the rotary ring (10) has a plurality of notches (14) on its periphery.

4. The device according to one of claims 1 to 3, **characterized in that** the axial coupling ring (3) has a plurality of elastic lugs (4), each having a coupling rib (5) at its end.

5. The device according to claim 4, **characterized in that** the axial coupling ring (3) has three elastic lugs (4) positioned at 120° intervals, each having a coupling rib (5) at its end.

6. The device according to one of claims 1 to 5, **characterized in that** the rotary locking ring (10) has several heels (11), each of which is intended to bear against a lug of the coupling ring (3).

7. The device according to claim 6, **characterized in that** the rotary locking ring (10) has three heels (11) positioned at 120° intervals, each of which is intended to bear against a lug of the coupling ring (3).

8. The device according to one of claims 6 to 7, **characterized in that** a stop (13) is adjacent to at least one of the heels (11).

9. The device according to claim 8, **characterized in that** a stop (13) is adjacent to each heel (11).

10. The device according to one of claims 1 to 9, **characterized in that** the rotary ring (10) has at least one axial rib (12) which is intended to snap into at least one axial groove (6) formed in the inward-facing surface of an elastic lug (4).

11. The device according to one of claims 1 to 10, **characterized in that** elastic return means (20) are interposed between the coupling ring (3) and the rotary ring (10) whereof the return action makes the rotary ring (10) return to the release position.

12. The device according to claim 11, **characterized in that** a spring (20) is interposed between the coupling ring (3) and the rotary ring (10) whereof the action makes the rotary ring (10) return to the release position.

13. The device according to one of claims 1 to 12, **characterized in that** it has means for visually signaling the position of the rotary ring (10).

14. The device according to claim 13, **characterized in that** the coupling ring (3) has a skirt (8) in which an aperture (9) is formed revealing a locking symbol provided on the rotary locking ring (10) when the device is in the locking position and revealing a release symbol provided on the rotary ring (10) when the device is in the release position.

15. A liquid fuel gas cartridge comprising a container (22) having an opening covered by a valve (23), said valve (23) having a circular radial bottom wall (24) that supports a central shut-off device (25) and a cylindrical axial side wall (26) which has, at its connection with the container (22), an annular groove (27) topped by an annular bead (28), **characterized in that** the axial wall (26) has at least one radial coupling means intended to cooperate with complementary radial coupling means according to one of claims 2 or 3 provided in a rotary ring (10) of a connection device according to one of claims 1 to 14, such that the rotary locking ring (10) can be turned between the locking position and the release position by rotating the cartridge in relation to the connection device.

16. The liquid fuel gas cartridge according to claim 15, **characterized in that** the axial wall (26) of the valve has at least one radial tooth.

17. The liquid fuel gas cartridge according to claim 16, **characterized in that** the axial wall (26) of the valve (23) has a plurality of radial teeth (29).

18. The liquid fuel gas cartridge according to one of claims 15 to 17, **characterized in that** the coupling means are adjacent to the circular radial bottom wall (24).

## Patentansprüche

1. Verbindungsvorrichtung für ein Gasgerät, die mit einem Ventil (23) einer Gaspatrone verbindbar ist und umfasst:
- einen Hahnkörper (2), der mit dem Gasgerät verbunden ist,
- einen axialen Kopplungsring (3), der mit dem Hahnkörper (2) rotierend verbunden ist und mindestens einen elastischen Fuß (4) aufweist, der dazu bestimmt ist, radial in eine ringförmige Nut (27) eines Ventils der Patrone eingeführt zu sein,
- einen drehenden Verriegelungsring, der im Verhältnis zum Kopplungsring (3) drehbar ist und eine Verriegelungsstellung einnehmen kann, in der der drehende Ring (10) dazu bestimmt ist, jeden elastischen Fuß (4) in der Nut (27) eingeführt zu halten, und eine Entriegelungsstellung, in der der drehende Ring (10) dazu bestimmt ist, das Lösen jedes elastischen Fußes (4) aus der Nut (27) zu erlauben und
- einen mit einem Kanal (18) ausgestatteten Zylinder (16), der dazu bestimmt ist, eine Klappe des Ventils zu entfernen,
**dadurch gekennzeichnet, dass** der Verriegelungsring (10) drehbar ist und radiale Kopplungsmittel aufweist, die imstande sind, mit komplementären radialen Kopplungsmitteln zusammenzuarbeiten, die derart auf dem Ventil (23) der Gaspatrone vorgesehen sind, dass der drehende Verriegelungsring (10) zwischen der Verriegelungsstellung und der Entriegelungsstellung durch eine Drehung der Patrone im Verhältnis zur Verbindungsvorrichtung drehbar ist.

2. Vorrichtung nach Anspruch 1, **dadurch gekennzeichnet, dass** der drehende Ring (10) mindestens eine radiale Raste aufweist.

3. Vorrichtung nach Anspruch 2, **dadurch gekennzeichnet, dass** der drehende Ring (10) auf seinem Umfang eine Vielzahl radialer Rasten (14) aufweist.

4. Vorrichtung nach einem der Ansprüche 1 bis 3, **dadurch gekennzeichnet, dass** der axiale Kopplungsring (3) mehrere elastische Füße (4) aufweist, die jeweils an ihrem Ende eine Kopplungsrippe (5) haben.

5. Vorrichtung nach Anspruch 4, **dadurch gekennzeichnet, dass** der axiale Kopplungsring (3) drei elastische Füße (4) aufweist, die bei 120° angeordnet sind, die jeweils an ihrem Ende eine Kopplungsrippe (5) haben.

6. Vorrichtung nach einem der Ansprüche 1 bis 5, **dadurch gekennzeichnet, dass** der drehende Verriegelungsring (10) mehrere Absätze (11) aufweist, von denen sich jeder auf einem Fuß des Kopplungsrings (3) abstützen kann.

7. Vorrichtung nach Anspruch 6, **dadurch gekennzeichnet, dass** der drehende Verriegelungsring (10) drei Absätze (11) aufweist, die bei 120° angeordnet sind, von denen sich jeder auf einem Fuß des Kopplungsrings (3) abstützten kann.

8. Vorrichtung nach einem der Ansprüche 6 bis 7, **dadurch gekennzeichnet, dass** ein Anschlag (13) mindestens einem der Absätze (11) benachbart ist.

9. Vorrichtung nach Anspruch 8, **dadurch gekennzeichnet, dass** ein Anschlag (13) jedem Absatz (11) benachbart ist.

10. Vorrichtung nach einem der Ansprüche 1 bis 9, **dadurch gekennzeichnet, dass** der drehende Ring (10) mindestens eine axiale Rippe (12) aufweist, die imstande ist, in mindestens eine Nut (6) einzurasten, die in die Seite eingearbeitet ist, die in Richtung Innenraum eines elastischen Fußes (4) ausgebildet ist.

11. Vorrichtung nach einem der Ansprüche 1 bis 10, **dadurch gekennzeichnet, dass** elastische Rückholmittel (20) zwischen dem Kopplungsring (3) und dem drehenden Ring (10) zwischengestellt sind, deren Rückholwirkung bewirkt, dass der drehende Ring (10) in Entriegelungsstellung zurückkehrt.

12. Vorrichtung nach Anspruch 11, **dadurch gekennzeichnet, dass** eine Feder (20) zwischen dem Kopplungsring (3) und dem drehenden Ring (10) zwischengestellt ist, deren Wirkung bewirkt, dass der drehende Ring (10) in Entriegelungsstellung zurückkehrt.

13. Vorrichtung nach einem der Ansprüche 1 bis 12, **dadurch gekennzeichnet, dass** sie visuelle Anzeigemittel der Stellung des drehenden Rings (10) aufweist.

14. Vorrichtung nach Anspruch 13, **dadurch gekennzeichnet, dass** der Kopplungsring (3) einen Mantel (8) aufweist, in den ein Fenster (9) eingearbeitet ist, das es erlaubt, ein auf dem drehenden Ring (10) eingearbeitetes Verriegelungssymbol erscheinen zu lassen, wenn die Vorrichtung in Verriegelungsstellung ist und erlaubt, ein auf dem drehenden Ring (10) eingearbeitetes Entriegelungssymbol erscheinen zu lassen, wenn die Vorrichtung in Entriegelungsstellung ist.

15. Patrone für brennbares Flüssiggas, die einen Behälter (22) umfasst, der eine von einem Ventil (23) verschlossene Öffnung hat, wobei das Ventil (23) eine kreisförmige radiale Bodenwand (24) hat, die eine zentrale Klappe (25) trägt, und eine zylindrische axiale Seitenwand (26), die auf Ebene ihrer Verbindung mit dem Behälter (22) eine ringförmige Rille (27) aufweist, über der sich eine ringförmige Wulst (28) befindet, **dadurch gekennzeichnet, dass** die axiale Wand (26) mindestens ein radiales Kopplungsmittel aufweist, das imstande ist, mit komplementären radialen Kopplungsmitteln nach einem der Ansprüche 2 oder 3 zusammenzuarbeiten, die in einem drehenden Ring (10) einer Verbindungsvorrichtung nach einem der Ansprüche 1 bis 14 derart vorgesehen sind, dass der drehende Verriegelungsring (10) zwischen der Verriegelungsstellung und der Entriegelungsstellung durch eine Drehung der Patrone im Verhältnis zur Verbindungsvorrichtung drehbar ist.

16. Patrone für brennbares Flüssiggas nach Anspruch 15, **dadurch gekennzeichnet, dass** die axiale Wand (26) des Ventils mindestens einen radialen Zahn aufweist.

17. Patrone für brennbares Flüssiggas nach Anspruch 16, **dadurch gekennzeichnet, dass** die axiale Wand (26) des Ventils (23) eine Vielzahl radialer Zähne (29) aufweist.

18. Patrone für brennbares Flüssiggas nach einem der Ansprüche 15 bis 17, **dadurch gekennzeichnet, dass** die Kopplungsmittel der kreisförmigen radialen Bodenwand (24) benachbart sind.
